Europäisches Patentamt

European Patent Office

Office européen des brevets

(19)

(11) EP 0 769 674 A2

(12) EUROPEAN PATENT APPLICATION

(43) Date of publication:
23.04.1997 Bulletin 1997/17

(51) Int Cl.6: G01B 11/24

(21) Application number: 96307404.2

(22) Date of filing: 11.10.1996

(84) Designated Contracting States:
DE FR IT

(30) Priority: 17.10.1995 US 544372

(71) Applicant: ALUMINUM COMPANY OF AMERICA
Alcoa Center, Pennsylvania 15069-0001 (US)

(72) Inventors:
• Chang, Robert C.
Alcoa Center, Pennsylvania 15069 0001 (US)

• Carroll, Christopher W.
Pittsburgh, Pennsylvania 15217 (US)

(74) Representative: Baillie, Iain Cameron et al
c/o Ladas & Parry
Altheimer Eck 2
80331 München (DE)

(54) Electronic fringe analysis for determining surface contours

(57) A method for determining the contour of a diffuse surface, including the location of the workpiece (12) on a reference plane (14). A computer (16) is employed to generate a virtual grating of fringe patterns that vary pixel gray scale values sinusoidally in a horizontal image row. The gray scale variation is repeated for all image rows, and said values are supplied to a video projector (18) which projects the values onto the diffuse surface of the workpiece (12) at an angle relative thereto. The diffuse surface and gray scale values are viewed with a video camera (20), which camera acquires and provides electronic images of the diffuse surface and values without the use of a camera grating. The viewing is performed at an angle different from the angle at which the fringe pattern is projected onto the diffuse surface. The video camera then supplies signals to the computer that represent the electronic images acquired by the camera, and the computer is employed to process the signals in a manner that determines the contour of the diffuse surface.

FIG. 1

**Description**

The present invention relates generally to the measuring of the contour of large, smooth, diffuse surface areas, such as sheet and plate skin structures for large aerospace use, and particularly to an easily assembled optical electronic apparatus that provides a large amount of measurement data in a rapid manner.

Conventional methods of determining the contour of surface areas involve point measurements such as the use of optical triangulation devices or ultrasonic transducers moved across the surface area. These methods measure surface heights at selected locations, and obtain surface contour by interpolation between measurement points. They provide surface contour information based on data of only a small fraction of the entire surface area.

Surface contouring by fringe analysis, such as moiré interferometry, provides measurement data by scanning the entire measuring surface area. These techniques can thus provide high volume measurement data. The essence of those techniques involves producing a fringe pattern on a surface area, measuring modulations of the pattern by the surface shape, and relating measured modulation to surface contour. Generally, the fringe pattern is periodic such as a sinusoidal function. The modulation is characterized by the phase of the fringe pattern, and phase-shifting algorithms are used for phase measurement. Currently, typical implementation includes producing fringes on a surface area by illuminating an optical grating containing the periodic sinusoidal pattern, and observing the surface area by a video camera. Phase-shifting phase measurement is accomplished by using electromechanical equipment to move the grating in predetermined steps to introduce phase shifts. The optical-electromechanical equipment is costly and fixed. It can also introduce phase shifting error due to limited accuracy of the electromechanical apparatus that moves the optical grating.

The present invention examines a surface "electronically" using a video projector, a video camera and a personal computer that generates and supplies light and dark bands of fringes to the projector. The projector projects these bands (fringes) on the surface to be examined. The computer thus provides a virtual grating in the form of an electronic image of fringe patterns that vary pixel gray scale values sinusoidally in a given horizontal image row. The computer repeats the gray scale variation for all image rows, and supplies these values to the video projector for projection onto the surface. The camera views the surface in a direction different from the direction at which the fringe pattern is projected onto the surface, and acquires electronic images of the surface without the use of a camera grating. The camera supplies signals to the computer that represent the electronic images acquired by the camera, and the computer then processes the signals in a manner that determines the contour of the surface using techniques discussed in detail below.

The invention, along with its objectives and advantages, will be better understood from consideration of the following detailed description and the accompanying drawings in which:

Figure 1 is a diagrammatic representation of the "setup" of the invention,
Figure 2 is a diagram of hardware connections of the invention,
Figure 3 shows the three-dimensional coordinates (x, y, z) of a reference plane in relation to the two-dimensional coordinates (i, j) and (u, v) of the projecting plane and camera pixels, respectively, and
Figure 4 shows the geometrical relationships in the optical setup of the invention for surface contour measurement of a workpiece located on a planar reference surface.

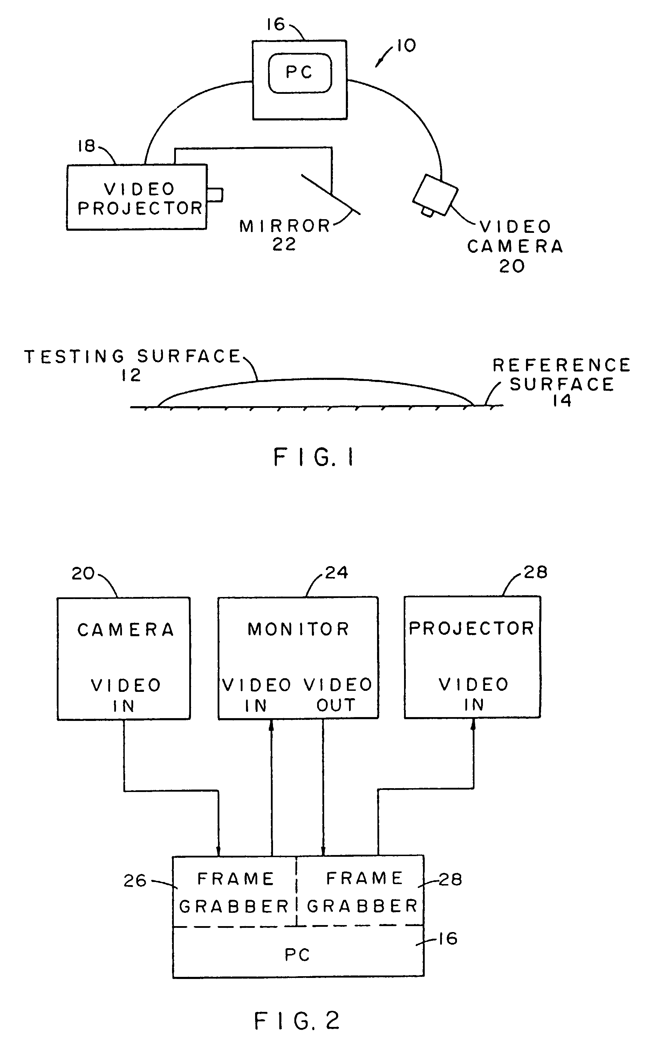

Referring now to Figure 1 of the drawings, an equipment setup 10 of portable components is shown schematically in optical relation to a workpiece 12 located on a reference plane 14. The setup includes three basic components, namely, a personal computer 16, a video projector 18 and video camera 20. A mirror 22 is shown, but is not needed, as projector 18 can face workpiece 12 and reference surface 14 directly. The PC is programmed to generate electronic images of a sinusoidal grating of fringes (not shown) consisting of light and dark bands, the values of which are sent to projector 18 over the electrical lead depicted schematically in Figure 2 of the drawings. An electronic image of fringe patterns may be generated by computing the gray scale of each pixel of the image, the value of which is sent to the projector directly. Alternatively, the pixel gray scale value can be pre-computed and stored in a computer file. During image projection, the file is loaded into a frame grabber, such as 28 in Figure 2, and sent to the projector. The gray scale of the i-th pixel in a row is

$$I(i) = I_0 + I_1 \cos\left(2\pi \frac{i}{p} + \theta_0\right) \qquad (1)$$

where

$I_0$ and I are the average and amplitude of sinusoids,
p is the period of a sinusoid in units of pixels, and
$\theta_c$ is the phase of the sinusoids measured at the first pixel.

Projector 18, having received the pattern generated by computer 16, projects it onto the exposed surface of workpiece 12, i.e., the surface available to the projector. Camera 20 views the workpiece surface along an axis different from the axis at which projector 18 projects the fringes to the surface, and acquires images of the surface without the use of a reference grating, which is different from the conventional moire fringe. Viewed by the camera, the projected fringe pattern on the surface is modulated by the shape of the surface. The modulation is measured in terms of phase angle of the projected sinusoid, which can be quantitatively determined by phase measuring techniques such as phase shifting algorithms. The phase measured on the test surface is then compared to phase measured on reference plane 14, which is a flat surface. The difference can be directly related to the difference of surface contours between the test surface and the reference plane. It should be noted that a flat testing surface will still modulate projected fringes in the form of a uniform phase shift, which measures the height of the flat testing surface.

A television monitor 24 is shown in Figure 2 connected to receive the output of computer 16 for personal viewing of the process. Figure 2 shows, in addition, frame grabbers 26 and 28 located between the personal computer and the camera, monitor and projector. A frame grabber is essentially an analog-to-digital converter for image acquisition and a digital-to-analog converter for image display, and synchronizes the operative sequences of analogue devices (camera, monitor and projector) with the internal clock of digital computers. Some video projectors can be directly synched with a computer, in which case a frame grabber is not necessary.

The arrangement 10 of the invention is easy to set up, is readily adaptable to inspecting different size surfaces, and offers high precision in phase shifting. Since the projected fringe pattern is generated electronically by computation using Equation 1, a phase-shifted pattern is easily obtained by adding phase shift to $\theta_0$ of the equation, as shown. It should be further noted that placement of the camera and projector are flexible, i.e., they do not need special alignment; the only constraint is non-parallel projecting and viewing axes. A projector that has been used in the present development is the EIKI LC-300. However, other projectors can be used such as a NEC MultiSync MT or even a homemade projector.

The flexibility of system 10 in placing the components of Figures 1 and 2 can introduce perspective distortions in the images of the test surface viewed by the system, i.e., when viewing an object three dimensionally, the size of the object appears to decrease in the direction away from the viewer. Perspective distortions are geometrical and create nonuniformities in the fringe spacings. Thus, surface contour cannot be determined simply from the phases and periods of the projected fringes. In the present invention, quantitative linear geometrical relationships between camera 20, projector 18 and reference plane 14 are established by a rather simple calibration procedure. The relationships, coupled with measured phase of the fringes, determine true perspective contours.

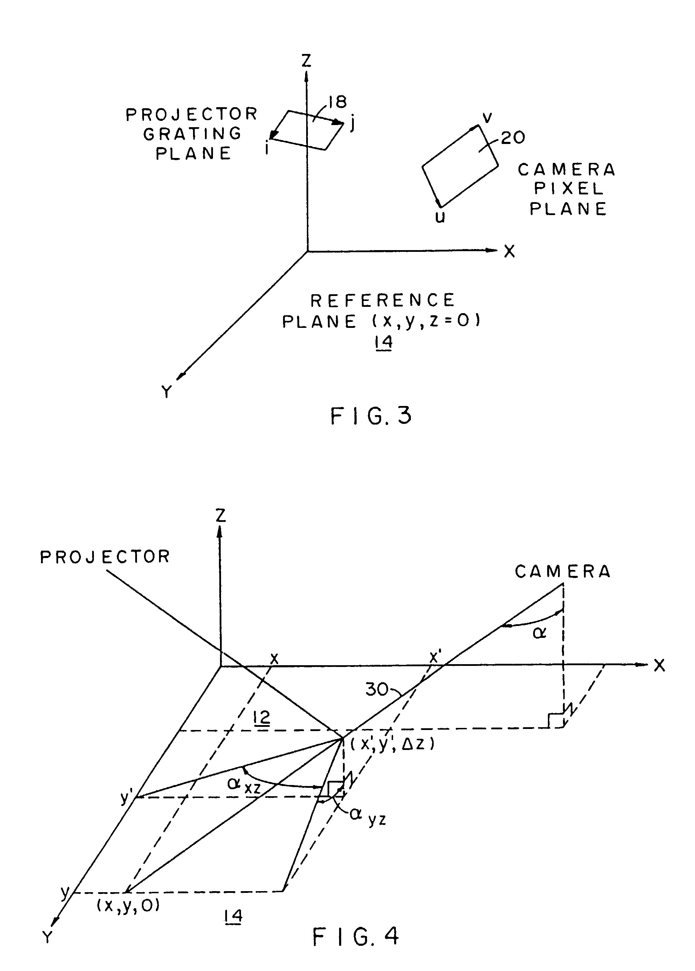

Such linear geometrical relationships are established by first considering the fringe projection system as consisting of three Cartesian coordinate systems, as shown in Figure 3 of the drawings. First, there is the three-dimensional world coordinate system (x, y, z) originating on reference plane 14, with z being zero. Next, there is the two-dimensional coordinate system (u, v) located on the plane of the camera pixels, while lastly, there is the two-dimensional coordinate system (i, j) of the grating plane of projector 18 containing the fringe patterns. Modeled on linear geometrical optics, such as described by D. H. Ballard and C. M. Brown in a textbook entitled "Computer Vision" (Prentice Hall, 1982, pp. 477 to 486) transformations from the three-dimensional world coordinates (x, y, z) to the two-dimensional camera and grating coordinates (u, v) and (i, j) can be accomplished by two 4x3 matrices C (for camera 20) and L (for light projector 18), as follows:

$$[x \ y \ z \ 1] \begin{bmatrix} c_{11} & c_{12} & c_{13} \\ c_{21} & c_{22} & c_{23} \\ c_{31} & c_{32} & c_{33} \\ c_{41} & c_{42} & 1 \end{bmatrix} = [ut \ vt \ t] \qquad (2)$$

$$[x \ y \ z \ 1] \begin{bmatrix} l_{11} & l_{12} & l_{13} \\ l_{21} & l_{22} & l_{23} \\ l_{31} & l_{32} & l_{33} \\ l_{41} & l_{42} & 1 \end{bmatrix} = [is \ js \ s] \qquad (3)$$

where t and s are constants used in homogeneous coordinates representation.

Calibration of the C matrix is accomplished by defining a set of fiduciary points of known coordinates on reference plane 14, and then accurately positioned at several known heights z in relation to the original height position of the reference plane (z=o). This can be done by having the reference plane set on another planar base surface, and placing a set of spacers of various known heights in between the reference surface and the base surface. This raises the reference surface to a known height. Images of the reference plane at these heights are then acquired by camera 20. The world coordinates of the fiduciary points at the several known heights $(x_1, y_1, z_1), (x_2, y_2, z_2) \ldots (x_N, y_N, z_N)$ and corresponding pixel locations in the camera coordinates $(u_1, v_1), (u_2, v_2)\ldots(u_N, v_N)$ are used to estimate matrix coefficients by the equation:

$$
\begin{bmatrix} u_1 \\ v_1 \\ \cdot \\ u_N \\ v_N \end{bmatrix}
=
\begin{bmatrix}
-u_1 z_1 & -u_1 y_1 & -u_1 x_1 & 0 & 0 & 0 & 0 & 1 & z_1 & y_1 & x_1 \\
-v_1 z_1 & -v_1 y_1 & -v_1 x_1 & 1 & z_1 & y_1 & x_1 & 0 & 0 & 0 & 0 \\
\cdot & \cdot & \cdot & \cdot & \cdot & \cdot & \cdot & \cdot & \cdot & \cdot & \cdot \\
-u_N z_N & -u_N y_N & -u_N x_N & 0 & 0 & 0 & 0 & 1 & z_N & y_N & x_N \\
-v_N z_N & -v_N y_N & -v_N x_N & 1 & z_N & y_N & x_N & 0 & 0 & 0 & 0
\end{bmatrix}
\begin{bmatrix} c_{11} \\ c_{21} \\ c_{31} \\ c_{41} \\ \cdot \\ \cdot \\ \cdot \\ c_{33} \end{bmatrix}
\qquad (4)
$$

The left-hand side of the equation is the multiplication of a matrix of size (2n x 11) by a matrix of size (11 x 1). The right-hand side is a matrix of size (2n x 1). The unknown matrix of size (11 x 1) can be solved via matrix pseudo-inverse, which provides a least-square-error solution.

Calibration of matrix L is achieved by using computer 16 to generate an image containing fiduciary marks at known grating (fringe) coordinates (i, j), which are known pixel locations in the computer generated image. This image is projected onto reference plane 14, and the reference plane itself is positioned at several known heights. Camera 20 now acquires the image of the fiduciary marks, the camera being previously calibrated in calibrating matrix C. The location of a fiduciary mark projected at a known height can be represented using the world coordinates, camera coordinates and grating coordinates. Grating coordinates (i, j) are known by definition while the camera coordinates (u, v) in the image acquired at known heights z can be measured from the image. Then, x and y of the world coordinates (x, y, z) of the fiduciary mark at the known height is determined from [(u,v),z] using above equation 2. Consequently, an equation in the form of equation 4 is established for world coordinates x, y and z and the projector coordinates (i, j), i.e.,

$$
\begin{bmatrix} i_1 \\ j_1 \\ \cdot \\ i_N \\ j_N \end{bmatrix}
=
\begin{bmatrix} l_{11} & l_{21} & l_{31} & l_{41} & \cdot & \cdot & \cdot & l_{33} \end{bmatrix}
\begin{bmatrix}
-i_1 z_1 & -j_1 z_1 & \cdot & -i_N z_N & -j_N z_N \\
-i_1 Y_1 & -j_1 Y_1 & \cdot & -i_N Y_N & -j_N Y_N \\
-i_1 x_1 & -j_1 x_1 & \cdot & -i_N x_N & -j_N x_N \\
0 & 1 & \cdot & 0 & 1 \\
0 & z_1 & \cdot & 0 & z_N \\
0 & Y_1 & \cdot & 0 & Y_N \\
0 & x_1 & \cdot & 0 & x_N \\
1 & 0 & \cdot & 1 & 0 \\
z_1 & 0 & \cdot & z_N & 0 \\
Y_1 & 0 & \cdot & Y_N & 0 \\
x_1 & 0 & \cdot & x_N & 0
\end{bmatrix}
\tag{5}
$$

Thus, elements of the matrix L can be solved using matrix pseudo-inversion.

In the present invention, geometrical relationships between camera 20, projector 18 and reference plane 14 are completely defined in matrices C and L, which are based on linear geometrical optics theory. The matrices are established without constraint on the alignment of the optics of arrangement 10, which involves the camera of the projector

7

and the plane of mirror 22, if used. However, the optical setup (Figure 1) must remain at the calibrated location for surface contour measurement. Sources of error in estimating matrix coefficients include aberrations of physical optics from paraxial optics model.

Surface contour is determined (computed) from the phase of the sinusoidal fringes projected on the surface of workpiece 12 exposed to projector 18 and camera 20. Consider a given camera pixel (u, v) which is aimed at a fixed known point (x,y,z=0) on the reference plane 14 (Figure 4). An image line 30 of the camera pixel (u, v) can be derived from equation 2 as:

$$\frac{x - x_0}{\lambda} = \frac{y - y_0}{\mu} = \frac{z - z_0}{v} \tag{6}$$

where:

$$\lambda = (c_{21} - c_{23}u)(c_{32} - c_{33}v) - (c_{31} - c_{33}u)(c_{22} - c_{23}v) \tag{7a}$$

$$\mu = (c_{31} - c_{33}u)(c_{12} - c_{13}v) - (c_{11} - c_{13}u)(c_{32} - c_{33}v) \tag{7b}$$

$$v = (c_{11} - c_{13}u)(c_{22} - c_{23}v) - (c_{21} - c_{23}u)(c_{12} - c_{13}v) \tag{7c}$$

The phase of the projected fringes at (x,y,z=0) is produced by a pixel (i, j) in the projector's grating plane (provided by computer 16). The sinusoidal fringe pattern is identical for all image rows on the projector's grating plane as described previously in equation 1. As such, the phase of the fringes projected by the grating pixel (i, j) is completely determined by i as:

$$\Phi_{ref}(i,j) = \Phi_{ref}(i) = 2\pi \frac{i}{p} + \theta_0 \tag{8a}$$

From equation 3, $\Phi(i)$ can also be represented as:

$$\Phi_{ref}(i) = \frac{2\pi}{p} \frac{l_{11}x + l_{21}y + l_{41}}{l_{13}x + l_{23}y + l_{43}} + \theta_0 \tag{8b}$$

If the height of workpiece 12 deviates from reference plane 14, image line 30 of camera pixel (u, v) will intercept the workpiece surface at an unknown point (x',y',$\Delta z$) (Figure 4), which is projected by an unknown pixel (i',j') on the projector's grating plane producing a phase according to equation 1 as:

$$\Phi(i',j') = \Phi(x',y',\Delta z) = 2\pi \frac{i'}{p} + \theta_0 \tag{9}$$

The unknown value i can be represented in terms of x',y' and $\Delta z$ using equation 3 as:

$$i' = \frac{l_{11}x' + l_{21}y' + l_{31}\Delta z + l_{41}}{l_{13}x' + l_{23}y' + l_{33}\Delta z + l_{43}} \tag{10}$$

In addition, Figure 4 shows that x' and y' can be represented in terms of $\Delta z$:

$$x' = x + \Delta z \tan\alpha_{XZ} \tag{11a}$$

$$y' = y + \Delta z \tan\alpha_{YZ} \tag{11b}$$

and Figure 4 and equation 6 show that:

$$\tan\alpha_{XZ} = \frac{\lambda}{v} \qquad (11c)$$

$$\tan\alpha_{YZ} = \frac{\mu}{v} \qquad (11d)$$

where $\alpha$ is the angle of imaging line 30 in Figure 4 measured from the Z-direction, and $\alpha_{XZ}$ and $\alpha_{YZ}$ are projections from angle $\alpha$ on the X-Z and Y-Z planes, respectively.

Finally, the relationship between surface height z and phase $\phi$ can be obtained by substituting equations 7, 8, 10 and 11 into 9:

$$\Phi(x',y',\Delta z) = \left[ \frac{2\pi}{p} \frac{d_2}{d_4} + \theta_0 \right] + \left[ \frac{2\pi}{p} \frac{(d_1 d_4 - d_2 d_3)\Delta z}{d_4(d_3\Delta z + d_4)} \right] \qquad (12)$$

where:

$$d_1 = d_1(\alpha_{XZ}, \alpha_{YZ}) = I_{11}\tan\alpha_{XZ} + I_{21}\tan\alpha_{YZ} + I_{31} \qquad (13a)$$

$$d_2 = d_2(x,y) = I_{11}x + I_{21}y + I_{41} \qquad (13b)$$

$$d_3 = d_3(\alpha_{XZ}, \alpha_{YZ}) = I_{13}\tan\alpha_{XY} + I_{23}\tan\alpha_{YZ} + I_{33} \qquad (13c)$$

$$d_4 = d_4(x,y) = I_{13}x + I_{23}y + I_{43} \qquad (13d)$$

The first term on the right in equation 12 is the phase of the sinusoidal fringes at point $x_0,y_0,z_0=0$ on reference surface 14 in Figure 4, and the second term is the phase deviation of the fringes caused by the height $\Delta z$ of workpiece 12 intercepting image line 30 at point x, y and $\Delta z$. As a consequence, $\Delta z$ is solved as:

$$\Delta z = \frac{d_4^2 \dfrac{\Phi(x',y',\Delta z) - \Phi_{ref}(i)}{2\pi} p}{d_1 d_4 - d_2 d_3 - d_3 d_4 \dfrac{\Phi(x',y',\Delta z) - \Phi_{ref}(i)}{2\pi} p} \qquad (14)$$

and x' and y' are solved by equations 11a and 11b.

Determining surface contour by equations IIa, 11b and 14 requires measuring phases $\Phi(x',y',\Delta Z)$ and $\Phi_{ref}(i)$. Phase-shifting techniques such as the four-bucket algorithm can be applied for phase measurement. These techniques involve consecutively shifting the phase of the fringe pattern by a predetermined amount, and acquiring corresponding images for phase computation using trigonometric identities. Phase shifting in the present invention is accomplished electronically by computer 16, and as such, is highly accurate in comparison to optomechanical apparatus, which can introduce phase-shifting errors.

The current invention measures surface contour from camera images of measuring surfaces. Each camera pixel will provide a value representing the height of the area imaged by that pixel. Because of the large number of pixels in today's CCD technology, the phase measuring scheme of the present invention provides a large amount of measurement for an accurate presentation of surface contour.

**Claims**

1. A method of determining the contour of a diffuse surface of a workpiece, comprising:

> locating the workpiece on a reference plane,
> using a computer to generate a virtual grating of fringe patterns that vary pixel gray scale values sinusoidally in a horizontal image row,
> repeating the gray scale value variation for all image rows,
> supplying said values to a video projector which projects the values onto a surface of the workpiece at an angle relative thereto,
> viewing the workpiece surface and gray scale values with a video camera that acquires and provides electronic images of said surface and values without the use of a camera grating at a viewing angle different from the angle at which the fringe pattern is projected onto the workpiece surface,
> supplying signals to the computer from the video camera that represent the electronic images acquired by the camera, and
> using the computer to process said signals in a manner that determines the contour of the workpiece surface.

2. The method of claim 1, in which the computer is a personal computer.

3. The method of claim 1, in which the virtual grating of the projected fringe patterns and the electronic image provided by pixels of the camera have coordinates located in planes that are two-dimensional while the reference plane has coordinates that are in a three-dimensional plane, the method comprising:

> establishing quantitative linear geometric relationships between the coordinates of the projected patterns and the camera images and reference plane,
> using said linear geometric relationships to remove geometrical distortions in the image of the workpiece surface that occur with the use of phase measurements of fringe patterns alone, and
> using the computer to phase shift sinusoidal fringes projected onto the surface of the workpiece by the video projector, and to compute phase angles to determine surface contour.

4. The method of claim 3, in which the linear geometric coordinates are established by use of:

> a Cartesian coordinate system consisting of two-dimensional coordinates each for the camera pixel plane and the fringe patterns in the plane of the projector, as provided by the computer, and three-dimensional coordinates for the reference plane, and
> relating the three-dimensional reference plane coordinates to the two-dimensional camera and projector coordinates by use of two 4x3 matrices that represent, respectively, the planes of the camera and projector, by calibrating the two matrices using a plurality of fiduciary points located on the reference plane at known heights to provide estimates of matrix coefficients that define the relationship between the two-dimensional planes of the camera and projector and the three dimensions of the reference plane.

16

PC

10

18

VIDEO
PROJECTOR

MIRROR
22

VIDEO
CAMERA
20

TESTING SURFACE
12

REFERENCE
SURFACE
14

FIG. 1

20

CAMERA

VIDEO
IN

24

MONITOR

VIDEO   VIDEO
IN        OUT

28

PROJECTOR

VIDEO
IN

26

FRAME
GRABBER

28

FRAME
GRABBER

16

PC

FIG. 2

FIG. 3

FIG. 4